# EUROPÄISCHE PATENTSCHRIFT

(11) **EP 0 969 910 B1**
(45) Veröffentlichungstag und Bekanntmachung des Hinweises auf die Patenterteilung: **01.08.2001**
(21) Anmeldenummer: 98908070.0
(22) Anmeldetag: 09.02.1998
(51) Int. Cl.: B01D 29/31, B01D 25/02

(54) **FILTRATIONSVORRICHTUNG**
FILTRATION DEVICE
SYSTEME DE FILTRATION

(30) Priorität: 15.02.1997 DE 19705855
(43) Veröffentlichungstag der Anmeldung: 12.01.2000
(73) Patentinhaber: SeitzSchenk Filtersystems GmbH, 55543 Bad Kreuznach (DE)
(72) Erfinder: STROHM, Gerhard, D-55278 Dexheim (DE); SCHNIEDER, Georg, D-55545 Bad Kreuznach (DE); HEPP, Wolfgang, D-55232 Alzey (DE)
(74) Vertreter: Fuchs Mehler Weiss & Fritzsche
(86) Internationale Anmeldenummer: EP9800683
(87) Internationale Veröffentlichungsnummer: WO9835741

(56) Entgegenhaltungen:
- EP-A- 0 531 817
- EP-A- 0 671 198
- EP-A- 0 747 106
- DE-A- 4 214 694
- US-A- 2 521 060
- US-A- 3 598 242

## Beschreibung

Die Erfindung betrifft eine Filtrationsvorrichtung mit einem Gehäuse mit mindestens einem in das Gehäuse eingesetzten Filtermodul, das zwei Endplatten, wovon mindestens eine Endplatte mindestens eine Einleit- und/oder Ableitöffnung aufweist, und mehrere dazwischen angeordnete Filterscheiben aufweist, wobei das Gehäuse Öffnungen zur Einleitung des Unfiltrats und zur Ableitung des Filtrats aufweist, und das Filtermodul aufeinandergestapelte Filterscheiben aus Tiefenfiltermaterial aufweist, die eine mindestens durch eine Durchbrechung gebildete innere Struktur aufweisen, wobei die durch das Tiefenfiltermaterial gebildete Begrenzungsfläche der Durchbrechung eine Durchströmungsfläche für Filtrat und Unfiltrat bildet.

Eine solche Filtrationsvorrichtung ist aus der US-A-2,521,060 bekannt. Die Filterelemente sind im wesentlichen blockförmig ausgestaltet. Ein wesentlicher Nachteil besteht darin, daß die Filtratkanäle aus runden Durchbrechungen zwischen der Außenfläche und einer zentralen Bohrung angeordnet sind. Es erfolgt damit eine Anströmung der Filterelemente sowohl von innen als auch von außen, wobei die Länge der Wege durch das Filtrationsmaterial aufgrund der runden Filtratkanäle unterschiedlich groß ist. Die Filtrationswirkung wird dadurch erheblich beeinflußt, so daß das Filtrat, das sich in den runden Bohrungen sammelt, unterschiedliche Qualität aufweist. Darüber hinaus sind durch die Vielzahl der Filtratkanäle auch entsprechend aufwendige Endplatten erforderlich.

Die EP 0 531 817 A2 beschreibt einen Wasserfilter, der poröse blockförmige Keramikelemente mit einem zentralen Kanal und einer Vielzahl von beliebigen Kanälen in der Wand aufweist, die als Filtratkanäle dienen können. Diese Elemente haben keine große Durchtrittsoberfläche, d.h. keinen langen Filtrationsweg der zu trennenden Flüssigkeit.

In der Filtration sind Filterpressen zur Aufnahme von Filterrahmen zur Kieselgurfiltration oder aber zur Aufnahme von Filterrahmen und dazwischen liegenden Filterschichten bekannt. Im Falle der Filterpressen zur Aufnahme von Filterschichten besitzen diese in der Regel jedoch keinen Mantel, welche die Filterschichten gegenüber dem Außenraum abschotten. Vielmehr erfolgt die Trennung von Unfiltrat- und Filtratraum gegeneinander und gegenüber der Umwelt nur durch die Verpressung der Filterschichten und die zwischen ihnen liegenden Filterrahmen. Diese Filterrahman verursachen jedoch bis zu 50% der Herstellkosten eines entsprechenden Apparates. Außerdem ist aufgrund der fehlenden Abschottung gegenüber der Umwelt und der damit verbundenen ständig notwendigen Überwachung eine Automatisation des Filtrationsprozesses nur sehr beschränkt möglich.

Eine Übersicht über den Stand der Technik findet sich in Horst Gasper "Handbuch der industriellen Fest-Flüssig-Filtration", Hüthig-Verlag 1990, S. 166ff.

Bei diesen Filtrationssorrichtungen ist eine Automatisation beim Wechseln der Filterelemente nicht möglich, so daß die Filterelemente einzeln von Hand vor der Filtration in den Filter eingelegt und nach der Filtration aus dem Filter entfernt werden müssen. Dies verursacht jedoch hohe Kosten bedingt durch den Personaleinsatz und durch den Stillstand der Filtrationslinie.

Für spezielle Anwendungsfälle ist es aus wirtschaftlichen Gründen notwendig, daß der Filter durch Umkehrung der Strömung nach der Filtration freigespült werden kann. Dies ist jedoch bei vielen auf dem Markt befindlichen Filtrationseinheiten nicht möglich, oder aber die spezielle Konstruktion der Filter verursacht sehr hohe zusätzliche Kosten.

In der DE 3520171 A1 ist eine Filterpresse horizontaler Bauart beschrieben, die einen Schutzmantel besitzt, der das Filterpaket umschließt. Die Filterpresse benötigt Filterrahmen und Filterplatten zum Abdichten zwischen den Filterelementen, da diese die Unfiltrat- und Filtraträume bilden. Da die Abdichtung nicht direkt zwischen den einzelnen Filterelementen erfolgen kann, bedingt dies eine deutlich höhere Investition für die Filterpresse, zumal die Filterrahmen und Filterplatten sehr aufwendig gestaltet sein müssen. Ferner verursacht die Segmentierung und die damit verbundene notwendige manuelle Bestückung der Filterpresse mit einzelnen Filterelementen hohe Kosten beim Wechseln der Filterelemente. Die Filtration bei dieser bekannten Filtrationseinrichtung erfolgt senkrecht zur Oberfläche der plattenförmigen Elemente. Die Endplatten bilden wie auch bei den weiter unten beschriebenen Filtereinrichtungen nur eine Wandung vom Unfiltrat- oder aber vom Filtratraum.

Ein ähnlicher Filtertyp in vertikaler Bauart ist unter dem Produktnamen "Radiumfilter® " bekannt. Dieser Filtertyp besitzt runde Filterrahmen, die extern zu einem Filtermodul mit dazwischenliegender Scheibe zusammengebaut werden. Diese Pakete werden anschließend in ein entsprechendes Gehäuse gehoben. Diese Filterrahmen bilden während der Filtration die Unfiltrat- und Filtraträume aus, indem sie die Strömung verteilen. Insbesondere die manuelle Trennung zwischen Filterrahmen und Filterschichten nach dem Betrieb der Filtrationseinrichtung verursacht sehr große Kosten und ist z.B. im Falle der Filtration von toxischen Fluiden oder aber von Fluiden mit hohen Dampfdrücken wie es bei vielen organischen Lösungsmitteln der Fall ist, nur unter großen Belastungen für das Personal möglich. Weiterhin bedingen die präzise geformten Filterrahmen einen hohen Teil der zu tätigenden Investitionskosten für einen derartigen Filter.

In der DE 3906815 A1 und der DE 3906816 C3 ist eine Filterplatte und ein Schichtenfilter mit einem die Filterschichten umfassenden Raum beschrieben, der eine Kontamination der Umwelt bei der Leckage verhindern soll. Für den Betrieb des Schichtenfilters ist eine Vielzahl von den in der DE 3906815 A1 beschriebenen Filterplatten notwendig. Dieses erhöht das Investitionsvolumen für ein Filtergerät. Weiterhin ist durch die Vielzahl der Dichtelemente zwischen den Filterplatten die Sicherheit bei der Filtration nur bedingt größer als bei anderen bekannten Filtergeräten. Auch ein Wechsel der Filterschichten ist ebenso aufwendig wie bei herkömmlichen Filtergeräten.

Eine Filtrationsvorrichtung mit einem geschlossenen Außenmantel ist dagegen in der DE 3234560 C2 beschrieben. Allerdings sind für den Betrieb genauso wie bei den obigen Filtrationseinrichtungen Filterrahmen notwendig, die Filterträger genannt werden. Auch hier ist insbesondere die manuelle Trennung der Filterträger von Filterpackungen aufwendig. Wie die DE 3403738 C2 beschreibt, ist außerdem die Herstellung der Filterpackungen sehr aufwendig, da jeder Filterkörper einzeln gebildet werden muß.

Ausgehend von der US-A-2,521,060 ist es Aufgabe der Erfindung, eine Filtervorrichtung mit einer besseren Ausnutzung des Filtermaterials und einer verbesserten Anströmung sowie Rückspülung des Filters zu schaffen.

Diese Aufgabe wird mit einer Filtrationsvorrichtung gelöst, bei der mindestens eine Filterscheibe des Filtermoduls eine sich bis zur Umfangsfläche der Filterscheibe erstreckende Durchbrechung aufweist, die eine Verbindung zur inneren Struktur der Filterscheibe herstellt.

Schichtenfilter oder Filterschichten bestehen aus Tiefenfiltermaterial, unter dem solche Materialien verstanden werden, die porös und durchströmbar sind, d.h. bei denen ein konvektiver Stofftransport durch die Materialien möglich ist. Tiefenmaterial kann organische und/oder anorganische, faserige und/oder körnige Stoffe aufweisen. Als Rohstoffe für das Tiefenfiltermaterial werden beispielsweise Zellulose, Kunststoffasern, Kieselgur, Perlite oder Metalloxide verwendet. Hierbei können Kieselgur und Perlite den Filterschichten zur Vergrößerung der inneren Oberfläche und damit zur Vergrößerung des Trubvolumens zugesetzt werden. Weiterhin können in den Hohlräumen Bestandteile des zu behandelnden Fluids durch Sperrwirkung und/oder Absorption/Adsorption zurückgehalten werden. Beispiele von Materialien, die auch für Tiefenfilteraufgaben verwendet werden können, sind Papiere, Pappen, Filterschichten, Membrane, poröse Keramikmaterialien, Metall- oder Polymergewebe, Nonwoven und gesinterte Materialien, z.B. aus Metallen, Metalloxiden, Glas oder Polymeren.

Wenn beispielsweise eine Anströmung von außen vorgenommen werden soll, so wird das Filtermaterial nicht nur über die Umfangsfläche angeströmt sondern das Unfiltrat kann über die sich bis zum Rand der Filterscheibe erstreckenden Verbindungsdurchbrechungen auch in das Innere des Filtermoduls eindringen, so daß die durch die innere Struktur gebildeten Durchströmungsflächen genutzt werden können, ohne daß eine entsprechende Zuführung über speziell ausgebildete Endplatten notwendig ist.

Aufgrund der inneren Struktur kann die Filterscheibe parallel zur Scheibenebene durchströmt werden, wobei sowohl eine Anströmung über die ebenfalls als Durchströmungsfläche wirkende Außenumfangsfläche, so daß sich das Filtrat in entsprechenden Durchbrechungen der inneren Struktur sammelt, als auch über die durch die innere Struktur gebildeten Durchströmungsflächen möglich ist. Dadurch können die Filterscheiben ohne Halterahmen oder dergl. aufeinandergestapelt werden, so daß ein Filtermodul aus einem einzigen Material hergestellt werden kann. Dieses Filtermodul kann außerhalb der Filtrationsvorrichtung zusammengebaut werden und als Einheit in die Filtrationsvorrichtung eingesetzt werden. Wenn das Filtermaterial ausgetauscht werden muß, kann das gesamte Modul entfernt und ohne zusätzliche Arbeiten - wie im Stand der Technik z.B. Auseinanderbauen des Moduls, um die Halterahmen zu entfernen - als Einheit entsorgt werden. Dadurch werden Zeit und Personal eingespart.

Vorzugsweise ist die Summe aller Durchströmungsflächen einer Filterscheibe, worunter sowohl die äußere Durchströmungsflächen als auch die im Inneren der Filterscheibe befindlichen Durchströmungsflächen gemeint sind, größer als die Summe aus der Außenumfangsfläche eines kleinsten, die Filterscheibe umhüllenden konvexen Körpers und der Außenumfangsfläche eines größten konvexen Körpers ist, der in eine beliebige Durchbrechung der Filterscheibe eingeschrieben ist. Konvexe Körper sind z.B. Kugeln, Ellipsoide, Zylinder, Kegel, Winkel, Tetraeder oder Quader und werden in "Kleine Enzyklopädie-Mathematik", VEB Bibliographisches Institut Leipzig 1979, S. 625 beschrieben.

Vorzugsweise unterscheidet man bei den Filterscheiben Durchbrechungen erster und zweiter Art, die nicht miteinander in Verbindung stehen. Die Filterscheiben können derart aufeinandergestapelt werden, daß nur die Durchbrechungen gleicher Art miteinander in Verbindung stehen und Filtrat- und Unfiltratkanäle innerhalb des Filtermoduls bilden.

Vorzugsweise weisen die Filterscheiben mindestens eine Sammeldurchbrechung zur Bildung eines Filtratsammelkanals im Filtermodul auf, wobei in diesem Fall eine entsprechende Ableitöffnung in einer der Endplatten vorgesehen ist. Bei umgekehrter Betriebsweise kann das Unfiltrat über diese Sammeldurchbrechung zugeführt werden.

Ferner können die Durchbrechungen und/oder die Verbindungsdurchbrechungen Versteifungsstege aufweisen, um die Stabilität der Filterscheibe zu erhöhen. Es können identische oder unterschiedliche Typen an Filterelementen bzw. Filterscheiben zu einem Filtermodul aufeinandergestapelt werden.

Die Filterscheiben sind durch ihre innere Struktur vorzugsweise so ausgebildet sein, daß nur ein Typ von Filterscheiben erforderlich ist, um ein wirksames Filtrationsmodul aufzubauen. Die Filterscheiben können alle in der gleichen Weise aufeinandergestapelt werden. Wenn es die innere Struktur jedoch erforderlich macht, sind die einzelnen Filterscheiben jeweils gegeneinander zu verdrehen.

Wegen der Filtrat- und Unfiltratkanäle innerhalb des Filtermoduls muß mindestens eine der Endplatten über eine entsprechende Einleit- und/der Ableitöffnung verfügen. Im einfachsten Fall kann die obere Endplatte vollkommen geschlossen sein, und die untere Endplatte weist lediglich eine Ableitöffnung für das Filtrat auf. Dies gilt für den Fall der Außenanströmung des Filtermoduls.

Wenn das Filtermodul von innen angeströmt werden soll, wird über diese Ableitlöffnung das Unfiltrat zugeführt. Mindestens eine Endplatte kann auch zum Verteilen des Unfiltrats in die Unfiltratkanäle des Filtermoduls und/oder zum Sammeln des Filtrats ausgebildet sein. Vorzugsweise weist in diesem Fall mindestens eine der Endplatten entsprechende Verteilerkanäle auf, die mit den entsprechenden Durchbrechungen erster Art und/oder zweiter Art in Verbindung stehen. Die Verteilerkanäle bilden ein kommunizierendes Kanalsystem, das jeweils nur mit den Durchbrechungen einer Art in Verbindung steht, damit keine Vermischung von Filtrat und Unfiltrat auftreten kann. Die Durchbrechungen der jeweils anderen Art werden entweder durch die Endplatte abgedeckt oder stehen mit einem eigenen Verteilersystem in der Endplatte in Verbindung. Welche Ausgestaltung der Endplatte gewählt wird, hängt von der Ausgestaltung der Filterscheibe und der gewünschten Betriebsart ab.

Die Filterscheiben können unmittelbar aufeinander liegen, wobei auch die Möglichkeit besteht, die Filterscheiben miteinander zu verkleben oder zu verschweißen.

Grundsätzlich verlangt das erfindungsgemäße Filtermodul keine Zwischenlagen. Jedoch kann es aus verschiedenen Gründen sinnwoll sein, Zwischenlagen zu verwenden, wobei Folien, Filterscheiben ohne Durchbrechungen oder auch Metallplatten, insbesondere Edelstahlplatten, zum Einsatz kommen können. Insbesondere bei der Verwendung von Metallplatten werden diese in größeren Abständen im Filtermodul angeordnet, um die Entsorgungsvorteile des Moduls nicht zu beeinträchtigen.

Zwischenlagen können dazu dienen, die Festigkeit eines Filtermoduls zu erhöhen, gerade dann, wenn durch eine komplexe Innenstruktur die Stabilität der Filterscheiben leidet und diese zu einer radialen Verformung neigen. So kann es beim Rückspülen eines Filtermoduls zu Ausbauchungen kommen, wenn dies nicht durch Zwischenlagen verhindert wird.

Ferner sorgen Zwischenlagen für eine Segmentierung des Filtermoduls, wodurch der Einbau erleichtert wird, weil das Modul aus mehreren Teilen, die leichter handhabbar sind, zusammengesetzt werden kann. Anstelle von einer Segmentierung eines Filtermoduls zu sprechen, kann man auch von mehreren übereinandergestapelten Filtermodulen sprechen, wobei in diesem Fall dann die Zwischenplatten als Endplatten zu bezeichnen wären.

Wenn die Zwischenlagen aus biegesteifem Material, wie z.B. Edelstahl mit entsprechender Dicke, z.B. 3mm, bestehen, tragen diese Zwischenplatten auch zu einer Vergleichmäßigung der Anpressung bei.

Vorzugsweise ist das Filtermodul senkrecht im Gehäuse angeordnet, wodurch der Aus- und Einbau erleichtert wird. Außerdem ist die vertikale Anordnung für eine gute Entlüftung vorteilhaft.

Vorteilhafterweise ist eine der beiden Endplatten, insbesondere die obere Endplatte, beweglich gelagert, damit die Quellfähigkeit und somit die Ausdehnung des Filterscheibenstapels berücksichtigt werden kann. Im Gehäuse kann eine Anpressvorrichtung vorgesehen werden, die vorzugsweise an der beweglich gelagerten Endplatte angreift. Eine solche Anpressvorrichtung kann von oben und/oder von unten auf das Filtermodul einwirken.

Wenn mehrere Filtermodule in einer Filtrationsvorrichtung übereinander und/oder nebeneinander angeordnet sind, kann eine gemeinsame Anpreßvorrichtung oder für jedes einzelne Filtermodul eine eigene Anpreßvorrichtung vorgesehen sein.

Gemäß einer weiteren Ausführungsform ist mindestens ein Sicherungselement vorgesehen, das die Filterscheiben zumindeste beim Einbau in ihrer relativen Lage zueinander fixiert. Je nach Art der Ausgestaltung der inneren Struktur der Filterscheiben müssen die Filterscheiben nach einem bestimmten Schema aufeinandergestapelt werden, damit kein Kurzschluß zwischen den Filtrat- und Unfiltratkanälen auftritt. Solche Sicherungselemente können mit Ausnehmungen am Scheibenrand oder auch im Inneren des Filtermoduls zusammenwirken, so daß die Lage der Filterscheiben zueinander eindeutig festgelegt wird.

Das Sicherungselement ist vorzugsweise Bestandteil einer Halteeinrichtung, die mit mindestens einer Endplatte verbunden ist. Vorzugsweise weist die Halteeinrichtung zwei Stäbe auf, über die die beiden Endplatten miteinander verbunden sein können, wobei die Stäbe in durch Ausnehmungen der Filterscheiben gebildete Außennuten des Filtermoduls eingreifen. Es ist möglich, mittels dieser Halteeinrichtung das gesamte Modul aus der Filtrationsvorrichtung zu entfernen.

Im Innern des Filtermoduls kann mindestens eine Rückhalteeinrichtung angeordnet sein. Hierdurch kann eine weitere Filtration erfolgen, um die Reinheit des filtrierten Fluids noch einmal zu erhöhen oder um das Fluid mit einer Membranfiltration zuverlässig zusätzlich zu sterilisieren. Wichtig ist hierbei, daß die Länge der Rückhalteeinrichtung, die vorzugsweise ein Kerzenfilter mit oder ohne Plissierung oder ein Siebfilter sein kann, kürzer als die minimale Länge des Filtermoduls bei der größten Verpressung ist, damit es nicht zu einer Stauchung des Kerzenfilters kommt. Vorzugsweise wird man, um Beschädigungen zu verhindern, die Beweglichkeit der Endplatten begrenzen.

Die Rückhalteeinrichtung kann an einer der beiden Endplatten lösbar befestigt sein.

Beispielhafte Ausführungsformen der Erfindung werden nachfolgend anhand der Zeichnungen näher erläutert.

Es zeigen:
- Fig. 1: eine perspektivische Darstellung einer Filterscheibe,
- Fig. 2: eine Draufsicht auf eine Filterscheibe gemäß einer weiteren Ausführungsform,
- Fig. 3: ein Filtermodul in Explosionsdarstellung,
- Fig. 4: eine perspektivische Darstellung eines Filtermoduls,
- Fig. 5: einen Vertikalschnitt durch ein Filtermodul,
- Fign. 6-9: Darstellungen von Filtrationseinrichtungen gemäß unterschiedlicher Ausführungsformen,
- Fign. 10+11: Aus- und Einbau eines Filtermoduls in eine Filtrationsvorrichtung gemäß zweier Ausführungsformen.

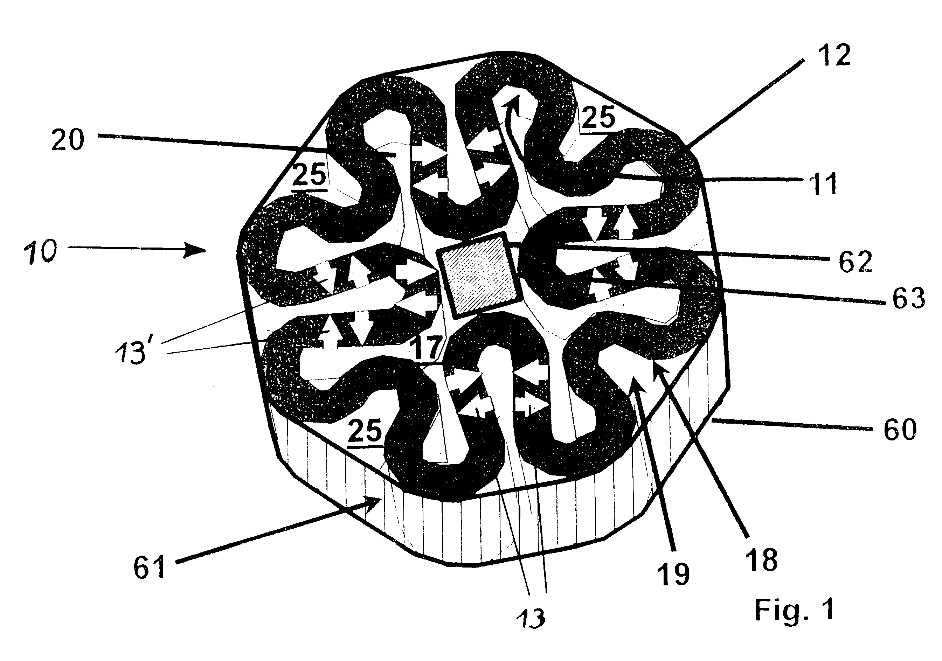

In der Fig. 1 ist eine flache Filterscheibe 10 dargestellt, die eine mäanderförmige Struktur aufweist. Nach der Herstellung einer herkömmlichen Filterscheibe, beispielsweise mit quadratischem Format, wird in die Filterscheibe 10 eine Durchbrechung 20 eingebracht, wodurch die innere Struktur 17 festgelegt wird. Die durch das Tiefenfiltermaterial 12 begrenzte Fläche der Durchbrechung 20 bildet eine Durchströmungsfläche 11 für das Filtrat bzw. Unfiltrat. Es handelt sich in der hier gezeigten Ausführungsform um eine fingerartige Durchbrechung 20, an die die Außenkontur 18 angepaßt ist. Das vorbleibende Tiefenfiltermaterial 12 weist somit eine mäanderförmige Struktur auf, wobei die Breite der filtrationswirksamen Bereiche überall gleich groß ist.

Wenn diese Filterscheibe 10 beispielsweise radial von außen (Pfeil 13) über die Umfangsfläche 19 angeströmt wird, die dann auch eine Durchströmungsfläche bildet, dann bilden die Schlaufen auf der Außenseite Unfiltraträume 25. Im Innern der Filterscheibe 10 sammelt sich das Filtrat, das durch eine Ableitöffnung in einer nicht dargestellten Endplatte abgezogen wird.

Diese Filterscheibe 10 kann auch in umgekehrter Richtung längs des Pfeils 13' von innen nach außen angeströmt werden. In beiden Fällen wird die Filterscheibe 10 parallel zur Ebene der Filterscheibe also im wesentlichen radial angeströmt.

Die Filterscheibe 10 wird von dem kleinsten, möglichen konvexen Körper (Außenkörper) 60 umhüllt, der im gezeigten Beispiel ein Polyeder mit einer achteckigen Grundfläche ist, wobei die Ecken gerundet sind. Die dazugehörige Außenumfangsfläche 61 kann man sich als ein um die Filterscheibe 10 gelegtes Band vorstellen. In ähnlicher Weise ist in die Durchbrechung 20 ein größtmöglicher konvexer Körper (Innerenkörper) 62 eingelegt, der eine Umfangsfläche 63 besitzt. Auch dieser konvexe Innenkörper besitzt eine viereckige Grundfläche. Aufgrund der sternförmigen Ausgestaltung der Filterscheibe 10 ist die Summe der Durchströmungsflächen 11, 19, größer als die Summe der Flächen 61 und 63.

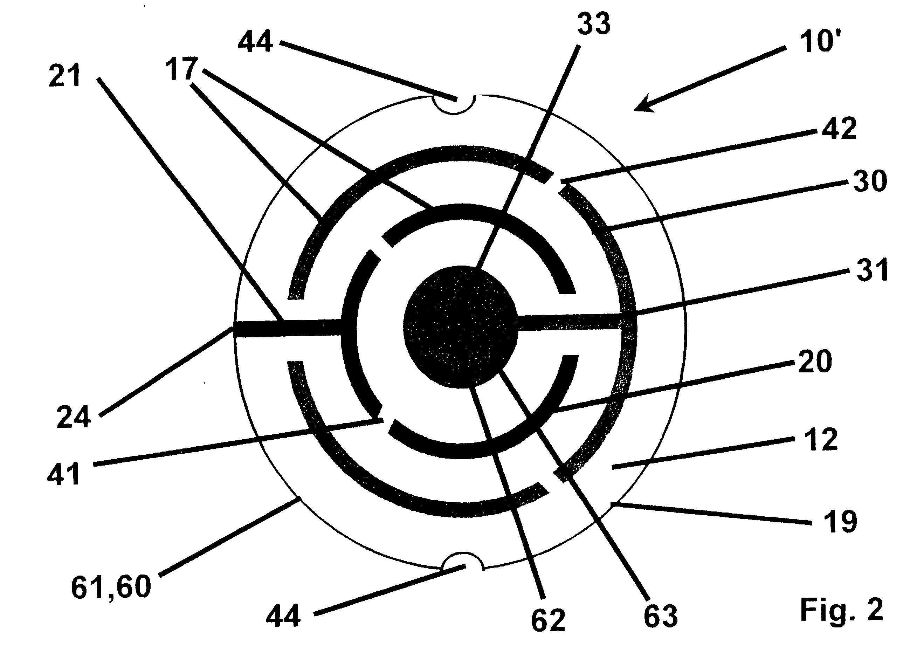

In der Fig. 2 ist eine weitere Ausführungsform einer Filterscheibe 10 in Form einer Scheibe 10' dargestellt, bei der zwei konzentrisch angeordnete ringförmige Durchbrechungen 20 und 30 in die Filterscheibe 10' eingebracht sind. Beide Durchbrechungen 20, 30 stehen nicht miteinander in Verbindung und bilden eine Durchbrechung erster Art und eine Durchbrechung zweiter Art. Die Außenumfangsfläche 61 des konvexen Außenkörpers 60 ist mit der Außenumfangsfläche 19 der Filterscheibe 10' in diesem Fall identisch.

Die Durchbrechungen 20 und 30 sind nicht zu einem Ring vollständig geschlossen, weil zusätzlich noch Verbindungsdurchbrechungen 21 und 31 vorgesehen sind, die die jeweiligen Kreise der Durchbrechungen 20 und 30 schneiden. Die Verbindungsdurchbrechung 21 stellt die Verbindung von der Durchbrechung 20 zur Umfangsfläche 19 dar. Die Verbindungsdurchbrechung 31 erstreckt sich ebenfalls in radialer Richtung und verbindet die äußere ringförmige Durchbrechung 30 mit einem kreisrunden Loch in der Mitte, die die sogenannte Sammeldurchbrechung 33 darstellt. Sämtliche Durchbrechungen 20, 21, 30, 31 bilden zusammen die innere Struktur 17.

Die Sammeldurchbrechung 33 stellt in der hier gezeigten Ausführungsform die größte Durchbrechung innerhalb der Filterscheibe 10' dar, so daß dort der größtmögliche konvexe Innenkörper 62 (schraffiert dargestellt) hineingelegt werden kann, der mit der Sammeldurchbrechung 33 identisch ist. Vergleicht man die Summe aller Durchströmungsflächen mit der Summe der Fläche 61 und der Fläche 63, so ist diese Summe aller Durchströmungsflächen größer.

Die Breite der filtrationswirksamen Bereiche zwischen der Umfangsfläche 19 und der äußeren Durchbrechung 30 bzw. der äußeren Durchbrechung 30 und der inneren Durchbrechung 20 sowie zwischen dieser Durchbrechung 20 und der Sammeldurchbrechung 33 ist überall gleich groß, so daß überall in der Tiefenfilterscheibe 10' dieselbe Filtrationswirkung erzielt wird. Die Scheibe kann so betrieben werden, daß über den mit 24 gekennzeichneten Eingang der Verbindungsdurchbrechung 21 das Unfiltrat in die innere Durchbrechung 20 eingeleitet wird. Die Filterscheibe wird dadurch nicht nur mit der Umfangsfläche 19, sondern auch im Innern über die innere Durchbrechung 20 angeströmt. Die umgekehrte Betriebsweise ist ebenfalls möglich.

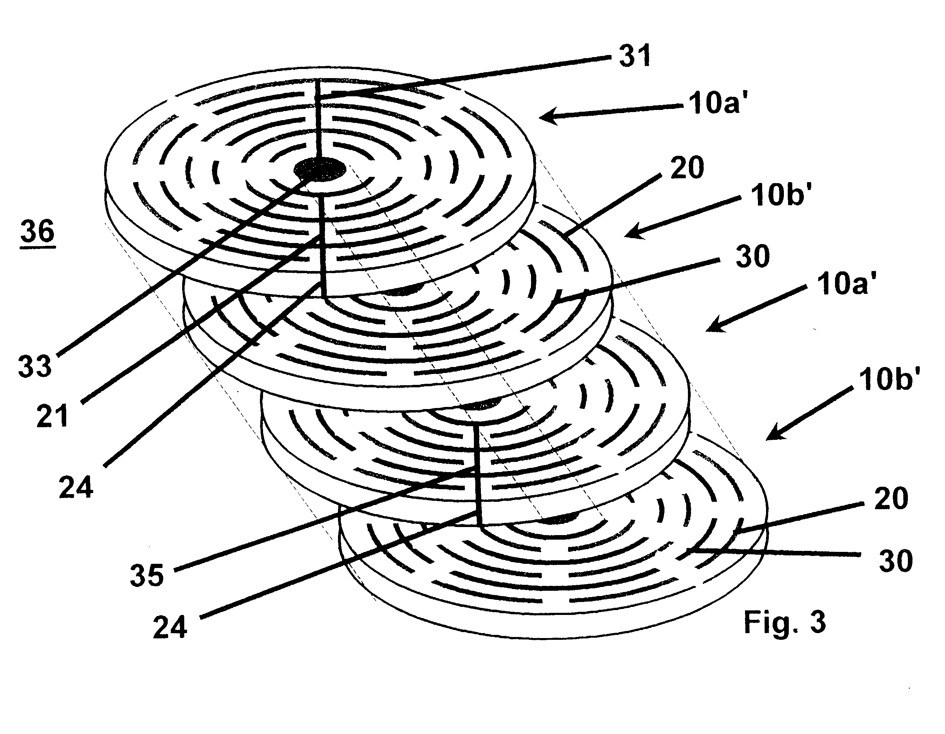

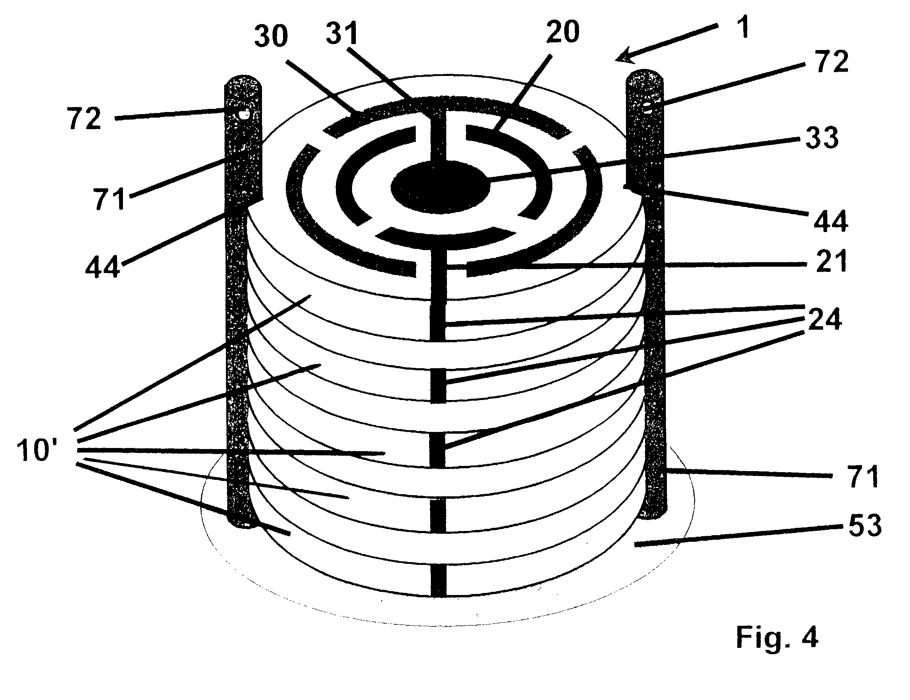

Um die Stabilität zu erhöhen, sind in der Durchbrechung 20 zwei Versteifungsstege 41 vorgesehen, die die Durchbrechung 20 in etwa drei gleich große kreisbogenförmige Abschnitte unterteilen. Entsprechend weist auch die äußere Durchbrechung 30 zwei Versteifungsstege 42 auf. Wenn die Filterscheiben 10' zu einem Filtermodul 1 aufeinandergestapelt werden, wie dies in der Fig. 3 und der Fig. 4 dargestellt ist, ist darauf zu achten, daß die Scheiben exakt zueinander ausgerichtet sind, damit die Verbindungsdurchbrechungen 21, 31 nicht versehentlich eine der Durchbrechungen 20 bzw. 30 kreuzen, was zu einer Vermischung von Filtrat und Unfiltrat führen würde. Es muß daher beim Zusammenbau darauf geachtet werden, daß die Durchbrechungen erster Art, hier die Durchbrechungen 20, 21 nicht mit den Durchbrechungen zweiter Art (Durchbrechungen 30, 31 und 33) in Verbindung treten können. Um die Ausrichtung der Filterscheibe 10' festzulegen, sind an der Umfangsfläche 19 Fixierstrukturen 44 in Form von halbkreisförmigen Ausnehmungen vorgesehen, in die die in der Fig. 4 gezeigten Stangen 71 eingreifen.

In der Fig. 3 ist ein Filterscheibenstapel in Explosionsdarstellung zu sehen, wobei zwei Ausführungsformen von Filterscheiben 10a' und 10b' alternierend aufeinandergesetzt sind. Die Filterscheibe 10a' besitzt eine radiale Verbindungsdurchbrechung 21 mit einem Eingang 24 am Rand, während die Filterscheiben 10b' ausschließlich konzentrische Durchbrechungen 20 und 30 aufweisen. Durch eine entsprechende Anordnung von Versteifungsstegen innerhalb der Durchbrechungen 20, 30 wird gewährleistet, daß sich die Durchbrechungen erster Art nicht mit den Durchbrechungen zweiter Art überkreuzen. Die Verbindungsdurchbrechungen 21, 31 befinden sich nämlich im Bereich der Versteifungsstege der jeweils benachbarten Filterscheibe. Die übereinanderliegenden Sammeldurchbrechungen 33 bilden einen gestrichelt eingezeichneten Filtratsammelkanal 35, während der die Filterscheiben 10a,b' umgebende Raum den Unfiltratsammelkanal 36 bildet.

In der Fig. 4 ist ein Filtermodul 1 dargestellt, das beispielhaft neun Filterscheiben aufweist, wovon die Filterscheibe 10' der in Figur 2 gezeigten Ausführungsform entspricht. Die Filterscheiben sind auf einer Endplatte 53 abgelegt, in der zwei Stäbe 71 befestigt sind, die in die entsprechende Fixierstruktur 44 am Scheibenrand eingreifen und auf diese Weise die Ausrichtung der Filterscheiben 10' gewährleistet. An den Stäben 71 kann das gesamte Modul erfaßt und aus der Filtrationsvorrichtung entfernt werden. Ein komplizierter Aus- und Einbau entfällt. Ferner kann das gesamte Modul bis auf die Stäbe 71 und die Endplatte 53 als ganzes entsorgt werden, ohne daß die einzelnen Filterscheiben voneinander getrennt werden müssen. Am oberen Ende der Stäbe 71 sind Zapfen 72 vorgesehen, an denen eine Trageeinrichtung angreifen kann, um das gesamte Modul aus der Filtrationsvorrichtung zu heben.

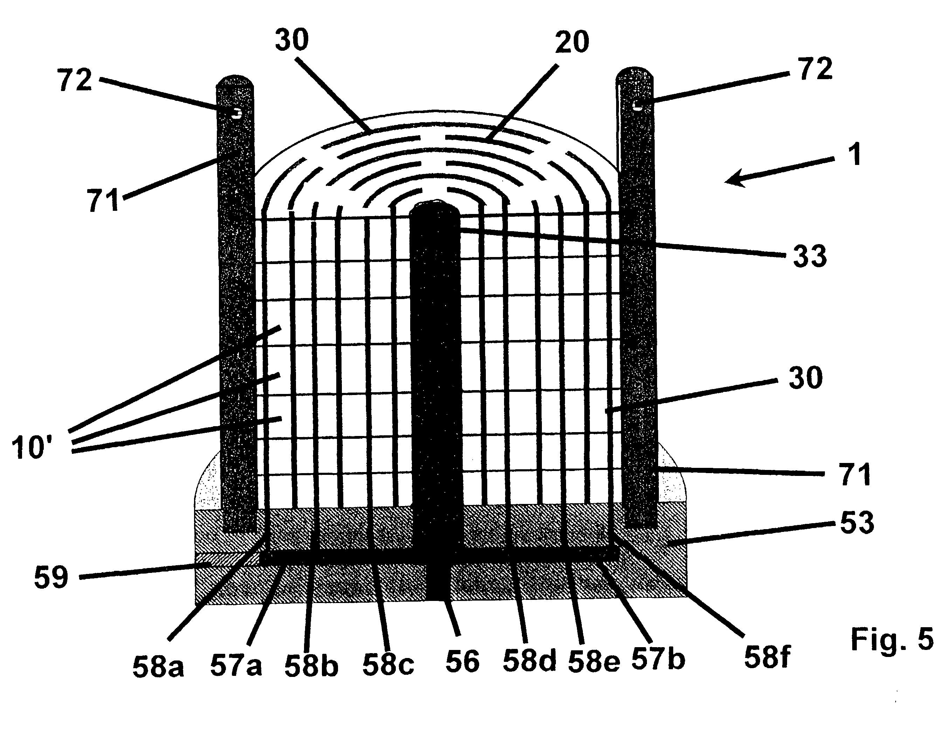

In der Fig. 5 ist ein Schnitt durch ein Tiefenfiltermodul 1 dargestellt. Die Filterscheiben 10' sind alle identisch ausgebildet und in der gleichen Weise, d.h. ohne Verdrehwinkel, aufeinandergelegt, so daß die Durchbrechungen 20 und 30 deckungsgleich aufeinanderliegen. Im Zentrum ist eine Sammeldurchbrechung 33 vorgesehen, in der entweder das Filtrat gesammelt oder das Unfiltrat eingeleitet wird. Die untere Endplatte 53 besitzt im Bereich der Sammeldurchbrechung 33 eine Einleit- bzw. Ableitöffnung 56, in die zwei horizontal angeordnete Verteilerkanäle 57a und 57b münden. Diese Verteilerkanäle 57a, 57b stehen über Verbindungskanäle 58a-f mit den Durchbrechungen 30 der unteren Filterscheibe 10' in Verbindung, so daß das dort gesammelte Filtrat zur Ableitöffnung 56 fließen kann bzw. wenn eine umgekehrte Betriebsweise vorgenommen wird, das Unfiltrat, das über die Einleitöffnung 56 zugeführt wird, zu den Durchbrechungen 30 gelangen kann. Die untere Endplatte 53 ist so ausgebildet, daß die Durchbrechungen 20 der benachbarten Filterscheibe 10' abgedeckt und somit verschlossen sind.

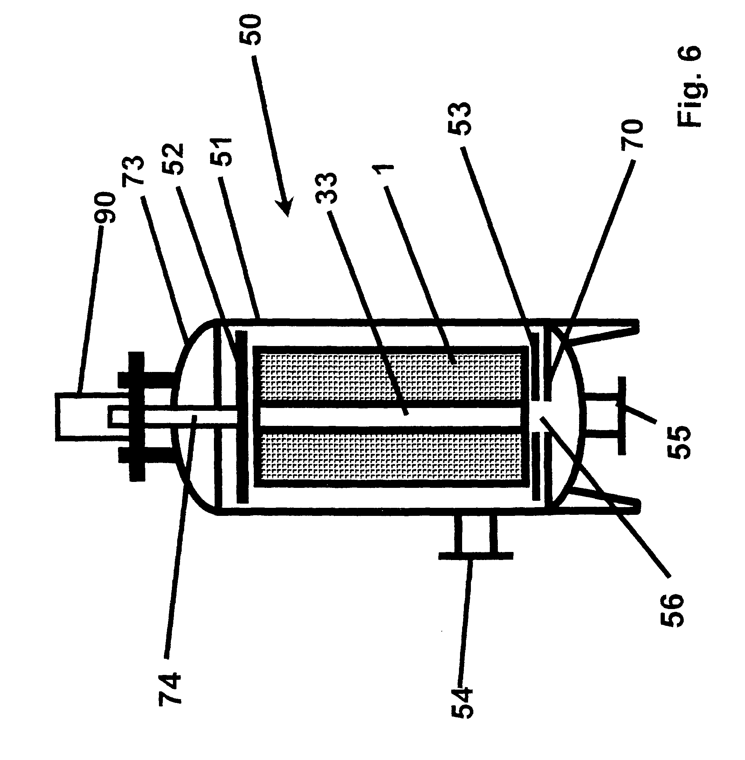

Ein solches Filtermodul ist gemäß der Darstellung der Fig. 6 in ein Filtrationsgehäuse 51 eingesetzt, wobei das Unfiltrat beispielsweise durch den Stutzen 54 in das Gehäuse 51 eintritt und nach dem Durchlauf durch das Filtermodul 1 über den Stutzen 55 wieder verläßt. Bei umgekehrter Betriebsweise wird das Unfiltrat über den Stutzen 55 zugeführt und das Filtrat über den Stutzen 54 abgeleitet.

Das Modul 1 weist eine untere Endplatte 53 auf, die auf einer fest eingebauten Trägerplatte 70 aufliegt. Beide Platten 53 und 70 besitzen eine Einleit- bzw. Ableitöffnung 56, die mit der Sammeldurchbrechung 33 fluchtet. Auf der Oberseite des Moduls 1 liegt eine bewegliche obere Endplatte 52 auf, an der eine Anpreßeinrichtung 90 angreift, die auf dem Deckel 73 der Filtrationsvorrichtung 50 installiert ist und beispielsweise über einen Kolben 74 auf die obere Endplatte 52 drückt und auf diese Art und Weise die Filterscheiben 10' zusammendrückt und fixiert. Ferner wird dadurch eine bessere Abdichtung der Endplatten 52 und 53 zum Filtermodul 1 gewährleistet. Weiterhin ist bei der Verwendung einer Anpreßvorrichtung eine Vertauschung von Unfiltratraum und Filtratraum möglich, da die Endplatte 52 durch die Anpreßvorrichtung 90 auf das Modul gepreßt wird und bei jeder Betriebsweise die Filterscheiben gehalten werden. Auch wenn in dieser wie in den anderen Darstellungen die Anpreßvorrichtung 90 von oben auf das Filtermodul 1 einwirkt, so ist grundsätzlich auch eine Anpressung von unten auf das Filtermodul 1 möglich. Bei Verwendung eines Hydraulikaggregates kann die Anpreßkraft konstant gehalten werden, so daß immer eine gleichmäßige Verpressung des Filtermoduls 1 erfolgt. Hierdurch kann jederzeit eine sichere Funktion des Filtermoduls 1 gewährleistet werden.

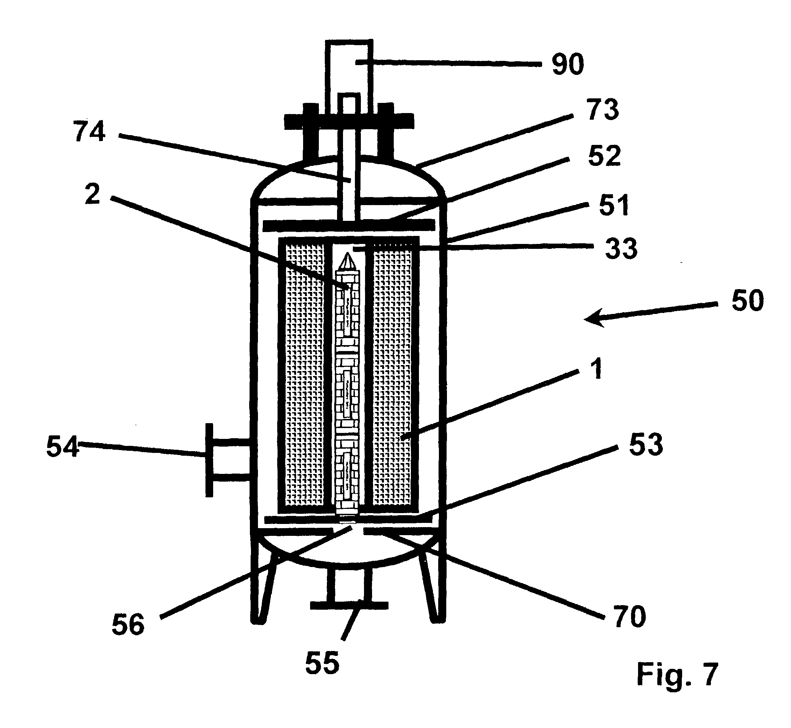

In der Fig. 7 ist eine weitere Ausführungsform dargestellt, die sich von der in der Fig. 6 gezeigten Ausführungsform lediglich dadurch unterscheidet, daß in der Sammeldurchbrechung 33 eine Filterkerze 2 angeordnet ist. Hierdurch kann eine weitere Filtration erfolgen, um die Reinheit des filtrierten Fluids nochmals zu erhöhen oder aber um das Fluid mit einer Membranfiltation zuverlässig zu sterilisieren. Wichtig ist, daß die Länge der Filterkerze 2 kürzer als die minimale Länge des Filtermoduls 1 bei der größten Verpressung ist, damit es nicht zu einer Stauchung der Filterkerze 2 kommen kann. Vorzugsweise wird daher eine Wegbegrenzung für die Anpreßvorrichtung 90 vorgesehen.

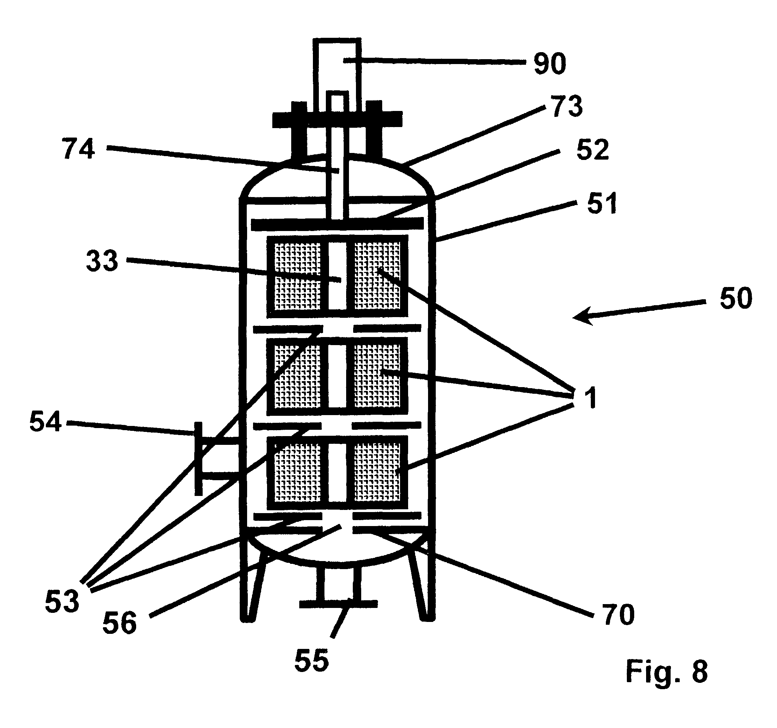

In der Fig. 8 ist eine weitere Ausführungsform vorgesehen, in der drei Filtermodule 1 übereinander abgeordnet sind. Auf der Trägerplatte 70 liegt die untere Endplatte 53 des untersten Filtermoduls 1 auf. Die obere Endplatte des unteren Filtermoduls 1 bildet gleichzeitig die untere Endplatte des mittleren Filtermoduls und das gleiche gilt für die Anordnung des obersten Filtermoduls. Bei dieser Ausführungsform können die mittleren Endplatten auch als Zwischenlager bezeichnet werden. Die obere Endplatte 52 ist beweglich angeordnet und, wie zuvor im Zusammenhang mit den anderen Ausführungsbeispielen erläutert worden ist, mit der Anpreßvorrichtung 90 verbunden. Es erfolgt hier eine gemeinsame Verpressung aller drei Filtrationsmodule 1 mittels der Anpreßvorrichtung 90. Der Vorteil dieser Anordnung besteht darin, daß eine hohe Bauhöhe der Filtrationsvorrichtung 50 erzielt werden kann. Die Handhabbarkeit wird durch die Unterteilung in drei Einzelmodule erleichtert, die jeweils mit ihrer darzugehörigen unteren Endplatte aus dem Filtrationsgehäuse 51 entnommen werden können.

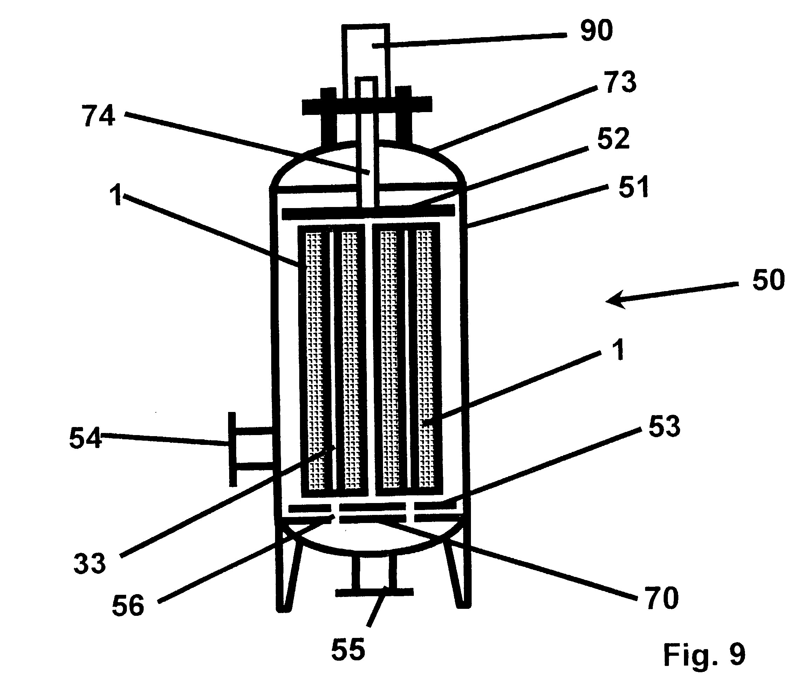

In der Fig. 9 ist eine weitere Ausführungsform dargestellt. Hierbei sind zwei Filtationsmodule 1 parallel so eingebaut, daß sie durch eine gemeinsame Anpreßvorrichtung 90 und eine gemeinsame Endplatte 52 bzw. 53 verpreßt werden können. Es ist auch möglich, für jedes Filtrationsmodul eine eigene Anpreßvorrichtung vorzusehen.

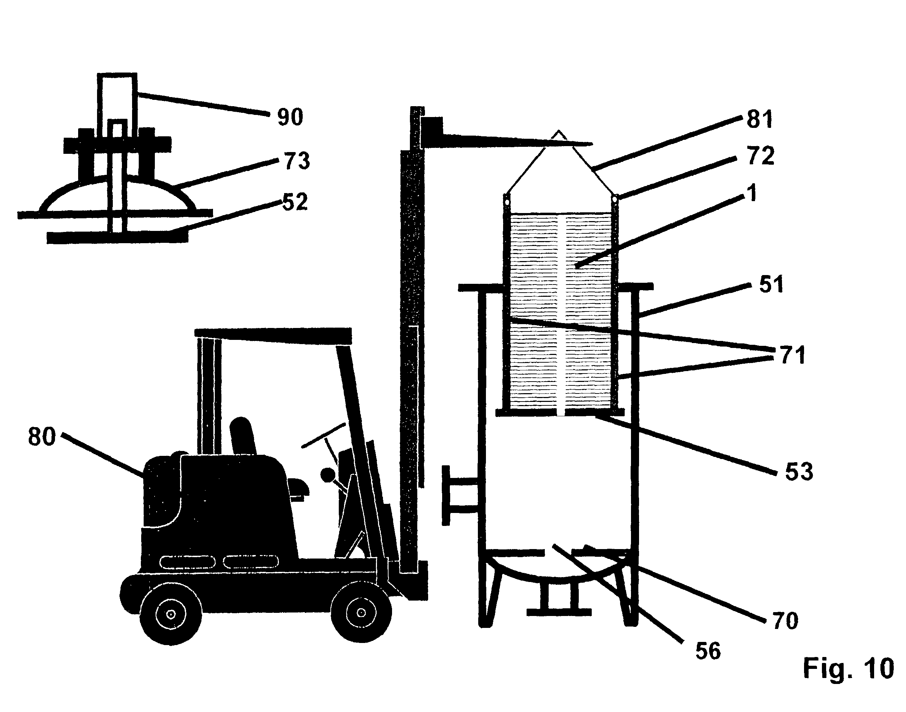

In der Fig. 10 ist der Einbau eines Filtermoduls 1 dargestellt. Zunächst wird das Filtrationsgehäuse 51 geöffnet, indem der Deckel 73 mit der Anpreßvorrichtung 90 und der oberen Endplatte 52 entfernt wird. Anschließend wird z.B. mit einem Gabelstapler 80 und einer nicht dargestellten Hebevorrichtung das Filtermodul 1 aus dem Filtergehäuse 51 gehoben. Hierbei hängt das Filtermodul 1 an einer Trageinrichtung 81, beispielsweise in Form eines Seils, das an den Zapfen 72 die Stäbe 71 angreift. Nachdem das Modul 1 in das Filtergehäuse 51 gesetzt wurde, werden die Stäbe 71 entfernt, bevor der Behälterdeckel 73 mit der Anpreßvorrichtung 90 wieder auf das Gehäuse 51 gesetzt wird. Anschließend kann das Filtermodul 1 durch die Anpreßvorrichtung 90 und über die Endplatte 52 verpreßt werden.

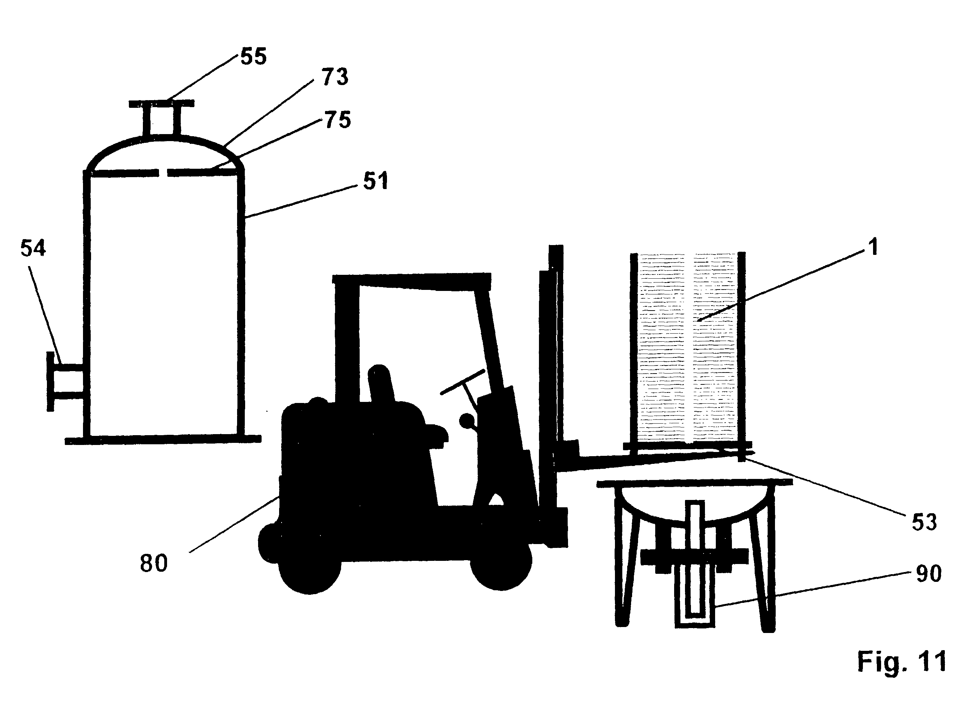

In der Fig. 11 ist eine weitere Ausführungsform dargestellt, bei der das Filtergehäuse 51 mit dem Deckel 73 eine Einheit bildet, so daß das Gehäuse durch Entfernen des Deckels zusammen mit dem Gehäuse 51 geöffnet wird. In dem dargestellten Fall steht das Filtermodul 1 auf einer beweglichen unteren Endplatte 53 und wird mittels der unter dem Gehäuse liegenden Anpreßvorrichtung 90 gegen die obere Trägerplatte 75 gepreßt. Das Fluid betritt das Gehäuse 51 durch den seitlichen Stutzen 54 und verläßt es nach der Filtration durch das Filtermodul 1 durch den oberen Stutzen 55. Zusätzlich sind in diesem Fall an der Unterseite des Filtergehäuses noch nicht dargestellte Ablaßventile angebracht, um eine vollständige Leerung zu gewährleisten. Der Vorteil einer derartigen Konstruktion liegt darin, daß die relativ schwere Anpreßeinrichtung 90 mit dem festen Teil des Filtergehäuses 51 verbunden ist, so daß der Aufbau stabiler ist und zudem die Anschlußleitungen fest verlegt werden können.

## Patentansprüche

1. Filtrationsvorrichtung mit einem Gehäuse mit mindestens einem in das Gehäuse eingesetzten Filtermodul, das zwei Endplatten, wovon mindestens eine Endplatte (52,53) mindestens eine Einleit- und/oder Ableitöffnung (56) aufweist, und mehrere dazwischen angeordnete Filterscheiben aufweist, wobei das Gehäuse Öffnungen zur Einleitung des Unfiltrats und zur Ableitung des Filtrats aufweist, und das Filtermodul (1) aufeinandergestapelte Filterscheiben (10,10',10a',10b') aus Tiefenfiltermaterial aufweist, die eine mindestens durch eine Durchbrechung (20) gebildete innere Struktur (17) aufweisen, wobei die durch das Tiefenfiltermaterial (12) gebildete Begrenzungsfläche der Durchbrechung (20) eine Durchströmungsfläche (11) für Filtrat und Unfiltrat bildet,
**dadurch gekennzeichnet,**
daß mindestens eine Filterscheibe (10,10',10a',10b') des Filtermoduls (1) eine sich bis zur Umfangsfläche (19) der Filterscheibe erstreckende Durchbrechung (21) aufweist, die eine Verbindung zur inneren Struktur (17) der Filterscheibe (10,10',10a',10b') herstellt.

2. Filtrationsvorrichtung nach Anspruch 1, **dadurch gekennzeichnet**, daß die Summe aller Durchströmungsflächen (11) einer Filterscheibe (10) größer ist als die Summe aus
- der Außenumfangsfläche (61) eines kleinsten, die Filterscheibe umhüllenden konvexen Körpers (60) und
- der Außenumfangsfläche (63) eines größten konvexen Körpers (62), der in eine beliebige Durchbrechung (20a-f, 21a,b,30,31a,b,33) der Filterscheibe eingeschrieben ist.

3. Filtrationsvorrichtung nach Anspruch 1 oder 2, **dadurch gekennzeichnet,** daß die Filterscheiben (10) Durchbrechungen erster Art (20) und Durchbrechungen zweiter Art (30) aufweisen, die nicht miteinander in Verbindung stehen, und
daß die Filterscheiben (10) derart aufeinandergestapelt sind, daß nur die Durchbrechungen gleicher Art miteinander in Verbindung stehen und Filtrat- und Unfiltratkanäle innerhalb des Filtermoduls (1) bilden.

4. Filtrationsvorrichtung nach einem der Ansprüche 1 bis 3, **dadurch gekennzeichnet,** daß die Filterscheiben (10,10',10a',10b') mindestens eine Sammeldurchbrechung (33) zur Bildung eines Filtratsammelkanals (35) im Filtermodul (1) bilden.

5. Filtrationsvorrichtung nach einem der Ansprüche 1 bis 4, **dadurch gekennzeichnet,** daß die Filterscheiben (10,10',10a',10b') unmittelbar aufeinanderliegen.

6. Filtrationsvorrichtung nach einem der Ansprüche 1 bis 5, **dadurch gekennzeichnet,** daß die Filterscheiben (10,10',10a',10b') untereinander verklebt oder verschweißt sind.

7. Filtrationsvorrichtung nach einem der Ansprüche 1 bis 4, **dadurch gekennzeichnet,** daß zwischen zwei Filterscheiben (10,10',10a',10b') jeweils eine Zwischenlage angeordnet ist.

8. Filtrationsvorrichtung nach Anspruch 7, **dadurch gekennzeichnet**, daß die Zwischenlage eine Folie, eine Filterscheibe ohne Durchbrechungen oder eine Metallplatte ist.

9. Filtrationsvorrichtung nach einem der Ansprüche 1 bis 8, **dadurch gekennzeichnet,** daß das Filtermodul (1) senkrecht im Filtrationsgehäuse (51) angeordnet ist.

10. Filtrationsvorrichtung nach einem der Ansprüche 1 bis 9, **dadurch gekennzeichnet,** daß eine der beiden Endplatten (52,53) beweglich gelagert ist.

11. Filtrationsvorrichtung nach einem der Ansprüche 1 bis 10, **dadurch gekennzeichnet,** daß mindestens ein Sicherungselement vorhanden ist, das die Filterscheiben (10,10',10a',10b') zumindest beim Einbau in ihrer relativen Lage zueinander fixiert.

12. Filtrationsvorrichtung nach einem der Ansprüche 1 bis 11, **dadurch gekennzeichnet,** daß das Sicherungselement Bestandteil einer Halteeinrichtung ist, die mit mindestens einer Endplatte (52,53) verbunden ist.

13. Filtrationsvorrichtung nach einem der Ansprüche 1 bis 12, **dadurch gekennzeichnet,** daß die Halteeinrichtung zwei Stäbe (17) aufweist, wobei die Stäbe (17) in durch Ausnehmungen der Filterscheibe gebildete Außennuten des Filtermoduls (1) eingreifen.

14. Filtrationsvorrichtung nach einem der Ansprüche 1 bis 13, **dadurch gekennzeichnet,** daß in dem durch die Sammeldurchbrechungen (33) der Filterscheibe (10,10',10a',10b') gebildeten Sammelkanal des Filtermoduls (1) eine Rückhalteeinrichtung angeordnet ist.

15. Filtrationsvorrichtung nach Anspruch 14, **dadurch gekennzeichnet,** daß die Rückhalteeinrichtung ein Kerzenfilter (2) mit oder ohne Plissierung oder ein Siebfilter ist.

16. Filtrationsvorrichtung nach einem der Ansprüche 14 oder 15, **dadurch gekennzeichnet,** daß die Rückhalteeinrichtung an einer der beiden Endplatten (52,53) lösbar befestigt ist.

17. Filtrationsvorrichtung nach einem der Ansprüche 1 bis 16, **dadurch gekennzeichnet,** daß am Filtrationsgehäuse (51) eine Anpreßvorrichtung (90) angeordnet ist, die an der beweglichen Endplatte (52,53) angreift.

18. Filtrationsvorrichtung nach einem der Ansprüche 1 bis 17, **dadurch gekennzeichnet,** daß mindestens eine Endplatte (52,53) zum Verteilen des Unfiltrats in die Unfiltratkanäle des Filtermoduls (1) und zum Sammeln des Filtrats ausgebildet ist.

19. Filrtationsvorrichtung nach einem der Ansprüche 1 bis 18, **dadurch gekennzeichnet,** daß mindestens eine der Endplatten (52,53) Verteilerkanäle (57a,b) aufweist, die mit den entsprechenden Durchbrechungen erster Art und/oder zweiter Art (20,30) in Verbindung stehen.

20. Filtrationsvorrichtung nach einem der Ansprüche 1 bis 19, **dadurch gekennzeichnet**, daß mehrere Filtermodule (1) nebeneinander und/oder übereinander angeordnet und durch Zwischenplatten voneinander getrennt sind.

21. Filtrationsvorrichtung nach Anspruch 20, **dadurch gekennzeichnet**, daß mehrere Filtermodule (1) eine gemeinsame oder eine eigene Anpreßvorrichtung (90) aufweisen.

## Claims

1. Filtration device having a housing and having at least one filter module which is inserted into the housing and which has two end plates, of which at least one end plate (52, 53) has at least one feed and/or discharge opening (56), and several filter disks located between those two end plates, the housing having openings for supplying the unfiltered material and for removing the filtered material, and the filter module (1) having filter disks (10, 10', 10a', 10b') of deep-bed filter material which are stacked on top of one another and which have an inner structure (17) formed at least by one opening (20), the boundary surface of the opening (20), which surface is formed by the deep-bed filter material (12), forming a flow face (11) for the filtered material and the unfiltered material, characterised in that at least one filter disk (10, 10', 10a', 10b') of the filter module (1) has an opening (21) which extends as far as the peripheral face (19) of the filter disk and which produces a connection to the inner structure (17) of the filter disk (10, 10', 10a', 10b').

2. Filtration device according to claim 1, characterised in that the sum of all the flow faces (11) of a filter disk (10) is larger than the sum of
- the outer peripheral face (61) of a minimum-size convex body (60) which envelops the filter disk and
- the outer peripheral face (63) of a maximum-size convex body (62) which is inserted into any opening (20a-f, 21a, b, 30, 31a, b, 33) of the filter disk.

3. Filtration device according to claim 1 or 2, characterised in that the filter disks (10) have openings of the first type (20) and openings of the second type (30) which are not connected to one another, and in that the filter disks (10) are stacked on top of one another in such a manner that only openings of the same type are connected to one another and form channels for filtered material and channels for unfiltered material within the filter module (1).

4. Filtration device according to any one of claims 1 to 3, characterised in that the filter disks (10, 10', 10a', 10b') form at least one collection opening (33) for forming a collection channel (35) for the filtered material in the filter module (1).

5. Filtration device according to any one of claims 1 to 4, characterised in that the filter disks (10, 10', 10a', 10b') lie directly on top of one another.

6. Filtration device according to any one of claims 1 to 5, characterised in that the filter disks (10, 10', 10a', 10b') are adhesively bonded or welded to one another.

7. Filtration device according to any one of claims 1 to 4, characterised in that one intermediate layer is arranged between each two filter disks (10, 10', 10a', 10b').

8. Filtration device according to claim 7, characterised in that the intermediate layer is a film, a filter disk without openings, or a metal plate.

9. Filtration device according to any one of claims 1 to 8, characterised in that the filter module (1) is arranged upright in the filtration housing (51).

10. Filtration device according to any one of claims 1 to 9, characterised in that one of the two end plates (52, 53) is movably supported.

11. Filtration device according to any one of claims 1 to 10, characterised in that there is at least one fixing element which fixes the filter disks (10, 10', 10a', 10b') in their positions relative to one another at least during installation.

12. Filtration device according to any one of claims 1 to 11, characterised in that the fixing element is a component of a holding means which is connected to at least one end plate (52, 53).

13. Filtration device according to any one of claims 1 to 12, characterised in that the holding means has two rods (17), the rods (17) engaging in outer grooves of the filter module (1) which are formed by recesses of the filter disk.

14. Filtration device according to any one of claims 1 to 13, characterised in that a retention means is arranged in the collection channel of the filter module (1), which channel is formed by the collection openings (33) of the filter disk (10, 10', 10a', 10b').

15. Filtration device according to claim 14, characterised in that the retention means is a cartridge filter (2), with or without pleating, or a screen filter.

16. Filtration device according to either claim 14 or claim 15, characterised in that the retention means is detachably fastened to one of the two end plates (52, 53).

17. Filtration device according to any one of claims 1 to 16, characterised in that a pressing device (90) which engages the movable end plate (52, 53) is arranged on the filtration housing (51).

18. Filtration device according to any one of claims 1 to 17, characterised in that at least one end plate (52, 53) is in a form for distributing the unfiltered material into the unfiltered-material channels of the filter module (1) and for collecting the filtered material.

19. Filtration device according to any one of claims 1 to 18, characterised in that at least one of the end plates (52, 53) has distributor channels (57a, b) which are connected to the corresponding openings of the first type and/or second type (20, 30).

20. Filtration device according to any one of claims 1 to 19, characterised in that several filter modules (1) are located next to one another and/or over one another and are separated from one another by intermediate plates.

21. Filtration device according to claim 20, characterised in that several filter modules (1) have a common or their own pressing device (90).

## Revendications

1. Dispositif de filtration comprenant une cuve avec au moins un module de filtrage monté dans la cuve, lequel module comporte deux plaques d'extrémité, parmi lesquelles au moins une plaque d'extrémité (52, 53) est munie d'au moins un orifice d'admission et/ou de sortie (56), et plusieurs disques de filtrage intercalés entre lesdites plaques d'extrémité, la cuve étant munie d'orifices pour l'admission du fluide pollué et pour l'évacuation du fluide filtré, et le module de filtrage (1) comportant des disques de filtrage (10, 10', 10a', 10b') empilés les uns sur les autres, qui sont réalisés dans un matériau de filtration en profondeur et comportent une structure interne (17) formée au moins par un passage (20), la surface de délimitation du passage (20), formée par le matériau de filtration en profondeur (12), formant une surface d'écoulement (11) pour le fluide filtré et pour le fluide pollué, caractérisé en ce qu'au moins un disque de filtrage (10, 10', 10a', 10b') dans le module de filtrage (1) comporte un passage (21) qui s'étend jusqu'à la face périphérique (19) du disque de filtrage, lequel passage forme une liaison avec la structure interne (17) du disque de filtrage (10, 10', 10a', 10b').

2. Dispositif de filtration selon la revendication 1, caractérisé en ce que la somme de toutes les surfaces d'écoulement (11) d'un disque de filtrage (10) est supérieure à la somme
- de la face périphérique extérieure (61) d'un corps convexe (60) le plus petit possible entourant le disque de filtrage et
- de la face périphérique extérieure (63) d'un corps convexe (62) le plus grand possible qui est inscrit dans un passage (20a-f, 21a, b, 30, 31a, b, 33) quelconque du disque de filtrage.

3. Dispositif de filtration selon la revendication 1 ou 2, caractérisé en ce que les disques de filtrage (10) comportent des passages conçus selon un premier mode (20) et des passages conçus selon un deuxième mode (30), qui ne communiquent pas entre eux, et
en ce que les disques de filtrage (10) sont empilés de telle sorte que seuls les passages d'un même mode communiquent entre eux et forment à l'intérieur du module de filtrage (1) des canaux pour le fluide filtré et des canaux pour le fluide pollué.

4. Dispositif de filtration selon l'une quelconque des revendications 1 à 3, caractérisé en ce que les disques de filtrage (10, 10', 10a', 10b') comportent au moins un passage collecteur (33) destiné à former dans le module de filtrage (1) un canal collecteur pour le fluide filtré (35).

5. Dispositif de filtration selon l'une quelconque des revendications 1 à 4, caractérisé en ce que les disques de filtrage (10, 10', 10a', 10b') sont directement superposés.

6. Dispositif de filtration selon l'une quelconque des revendications 1 à 5, caractérisé en ce que les disques de filtrage (10, 10', 10a', 10b') sont assemblés les uns aux autres par collage ou soudage.

7. Dispositif de filtration selon l'une quelconque des revendications 1 à 4, caractérisé en ce qu'une couche intermédiaire est disposée respectivement entre deux disques de filtrage (10, 10', 10a', 10b').

8. Dispositif de filtration selon la revendication 7, caractérisé en ce que la couche intermédiaire est formée par une feuille, un disque de filtrage sans passage ou une plaque métallique.

9. Dispositif de filtration selon l'une quelconque des revendications 1 à 8, caractérisé en ce que le module de filtrage (1) est disposé verticalement dans la cuve de filtration (51).

10. Dispositif de filtration selon l'une quelconque des revendications 1 à 9, caractérisé en ce que l'une des deux plaques d'extrémité (52, 53) est logée de manière mobile.

11. Dispositif de filtration selon l'une quelconque des revendications 1 à 10, caractérisé en ce qu'il est prévu au moins un élément de sécurité, par lequel les disques de filtrage (10, 10', 10a', 10b') sont bloqués dans leur position relative au moins pendant le montage.

12. Dispositif de filtration selon l'une quelconque des revendications 1 à 11, caractérisé en ce que l'élément de sécurité est une partie intégrante d'un dispositif de maintien, qui est assemblé avec au moins une plaque d'extrémité (52, 53).

13. Dispositif de filtration selon l'une quelconque des revendications 1 à 12, caractérisé en ce que le dispositif de maintien comporte deux tiges (17), les tiges (17) s'engageant dans des rainures extérieures du module de filtrage (1), formées par des gorges réalisées dans les disques de filtrage.

14. Dispositif de filtration selon l'une quelconque des revendications 1 à 13, caractérisé en ce qu'un dispositif de rétention est disposé dans le canal collecteur du module de filtrage (1), formé par les passages collecteurs (33) du disque de filtrage (10, 10', 10a', 10b').

15. Dispositif de filtration selon la revendication 14, caractérisé en ce que le dispositif de rétention est une bougie filtrante (2) avec ou sans plis ou un filtre à tamis.

16. Dispositif de filtration selon la revendication 14 ou 15, caractérisé en ce que le dispositif de rétention est fixé de manière amovible sur l'une des deux plaques d'extrémité (52, 53).

17. Dispositif de filtration selon l'une quelconque des revendications 1 à 16, caractérisé en ce qu'un dispositif de pression (90) est monté contre la cuve de filtration (51), lequel dispositif de pression agit sur la plaque d'extrémité (52, 53) mobile.

18. Dispositif de filtration selon l'une quelconque des revendications 1 à 17, caractérisé en ce qu'au moins une plaque d'extrémité (52, 53) est conçue pour la distribution du fluide pollué dans les canaux pour fluide pollué du module de filtrage (1) et pour y accumuler le fluide filtré.

19. Dispositif de filtration selon l'une quelconque des revendications 1 à 18, caractérisé en ce qu'au moins l'une des deux plaques d'extrémité (52, 53) comporte des canaux de distribution (57a, b), qui communiquent avec les passages correspondants du premier mode et/ou du deuxième mode (20, 30).

20. Dispositif de filtration selon l'une quelconque des revendications 1 à 19, caractérisé en ce que plusieurs modules de filtrage (1) sont disposés les uns à côté des autres ou les uns au-dessus des autres et sont séparés les uns des autres par des plaques intermédiaires.

21. Dispositif de filtration selon la revendication 20, caractérisé en ce que plusieurs modules de filtrage (1) comportent un dispositif de pression (90) commun ou propre à chaque module.
